# EUROPEAN PATENT APPLICATION

(11) **EP 4 001 642 A1**
(43) Date of publication of application: **25.05.2022**
(21) Application number: 20207662.6
(22) Date of filing: 13.11.2020
(51) Int. Cl.: F03D 80/30, F03D 17/00

(54) **WIND TURBINE LIGHTNING DIAGNOSTIC APPARATUS AND LIGHTNING STROKE DIAGNOSTIC METHOD**

(71) Applicant: Ørsted Wind Power A/S, 7000 Fredericia (DK)
(72) Inventor: LARSEN, Flemming Møller, 7000 Fredericia (DK)
(74) Representative: Gaunt, Thomas Derrick

(57) **Abstract**

Wind turbine lightning stroke diagnostic apparatus. An air pressure sensor (1) is mounted using a mount (1) within an internal cavity (4) of a wind turbine blade assembly (3). A datalogger (7) monitors the output of the air pressure sensor (1) for identifying a lightning generated shockwave within the internal cavity.

## Description

The present invention concerns wind turbine lightning diagnostic apparatus and, in particular, apparatus which, when installed into a wind turbine, may provide diagnostic data for use in the identification of by-pass lightning strokes. The present invention also concerns a lightning stroke diagnostic method and, in particular, a method using the wind turbine lightning diagnostic apparatus for the identification of by-pass lightning strokes. By-pass lightning strokes are lighting strokes which are not effectively captured by the receptors of a lightning protection system, LPS.

Modern wind turbines are provided with lightning protection systems, LPS, to prevent or minimise damage due to lighting strokes. Such systems comprise conductive receptors provided on the surface of the wind turbine blades which are grounded by a down-conductor which extends through the rotor hub, nacelle, and down to the base of the tower, or the tower's foundation where applicable, to connect to ground. During a lighting strike, as a leader nears the wind turbine, an upward streamer is formed at the LPS receptor and attaches to the leader to establish a current path. This current path then produces the lightning return stroke in which a huge surge of electrical current is delivered, manifesting as a lightning flash. In this scenario, damage to the structure of the wind turbine blades is prevented or largely mitigated because the current surge is conducted through the LPS to ground.

Although the LPS will normally protect the wind turbine during direct strikes to the receptors, a monitoring system for recording information about the strength of the lightning is normally provided to record diagnostic information for determining when routine repairs and maintenance operations are needed. For example, the LPS supplier may rate their equipment up to a certain lightning current load or number of strikes, after which components may need to be checked or replaced. Historically, monitoring has been achieved by providing a magnetically sensitive lightning registration card system adjacent to the down-conductor. In the event of a lightning stroke, the current conducted through the down-conductor will induce a magnetic field that is proportional to the conducted current. This magnetic field is registered by the registration card to provide a record of lighting current in kA. However, such a registration card system has a number of shortcomings. Firstly, it relies on the registration card being physically removed to readout the current value. As such, regular site visits are therefore required to check the cards, and no remote alarm can be trigged in the event of a significant lightning stroke, which is even more costly and difficult for blades on offshore turbines. Secondly, the registration cards provide relatively crude diagnostic data. This is because they merely record the maximum current that occurred during the installed time period. As such, if a wind turbine were to be struck multiple times, the registration card will only provide a record of the largest single stroke. This can therefore provide a misleading picture of the amount of lightning a wind turbine may have been subjected to.

In an attempt to address these shortcomings, some modern lighting protection systems are fitted with sophisticated electronic monitoring apparatus which records more detailed information about the conducted down-current arising from a lightning stroke. These types of electronic lighting monitoring systems may also be interfaced with the wind turbine's SCADA (supervisory control and data acquisition) system to provide remote monitoring.

Conventional electronic lightning monitoring systems have provided improved data for assessing lightning strokes by recording information such as the number of strokes, their duration, and the specific energy they deliver. However, as with magnetic registration card systems, the recorded data is limited to parameters associated with the current measured in the down-conductor. Consequently, the recorded data may still be misleading in instances where the lightning is not captured directly by the LPS receptors.

In this connection, a so-called by-pass lightning stroke may occur in which a lightning stroke connects through the body material of the wind turbine blade assembly, rather than at the LPS receptor. That is, although the upward streamer will normally form at the LPS receptor, this is not always the case and the LPS receptor can potentially be bypassed. Furthermore, the likelihood for a by-pass lightning stroke is increased with some modern wind turbine blades that utilise materials such as carbon fibre, which include electrically conductive elements. In the event of a by-pass lightning stroke, the blade can be subjected to impact damage, as well as uncontrolled conduction through the blade material until the current reaches the LPS down-conductor. This can not only damage the blade assembly, but importantly the current recorded by the LPS monitoring system may appear relatively low because of the dissipation of energy over the blade material. As such, even a very significant and damaging lightning stroke may not be readily identified by conventional LPS monitoring.

In addition to the need to have accurate lighting strike information for maintaining the operation of the turbine, the above issues also have significant commercial implications. For example, it would be advantageous for a blade supplier to be able to demonstrate that a failure occurred due to a by-pass lightning strike, rather than an inherent structural defect in their product. Similarly, LPS suppliers would benefit from being able to monitor the lightning capture and conduction efficiencies of their systems, particularly in the context of support claim management. Conversely, wind turbine generator operators would benefit from having accurate diagnostic data to demonstrate, for example, that by-pass lightning strikes were not the cause of failure issues.

The present invention therefore seeks to address the above issues.

According to a first aspect of the present invention, there is provided wind turbine lightning stroke diagnostic apparatus comprising: an air pressure sensor for detecting an increase in air pressure; a mount for mounting the air pressure sensor within an internal cavity of a wind turbine blade assembly; and a sensor monitor configured for identifying a lightning generated shockwave within the internal cavity based on an output from the air pressure sensor.

In this way, a by-pass lighting stroke may be identified based on the pressure sensor and monitor being configured to detect the supersonic pressure wave generated inside the hollow interior of the blade assembly by the by-pass lightning stroke. That is, in the event of a by-pass lighting stroke, the delivered current surge is conducted through the blade material in an uncontrolled manner. This results in arc formations over the surfaces of the blade material, or between the lightning entrance point at the blade shell and the LPS down conductor. The temperature of the lightning reaches up to temperatures of 20,000 to 30,000 K. Importantly, this heating occurs extremely rapidly because the lightning stroke is a microsecond (µs) event, and shockwaves are thereby generated as a result of the extreme heating from the arc expanding the air causing pressure shock waves. On the exterior surfaces of the blade, these shockwaves may quickly dissipate. However, within the internal cavity of the hollow blades, the pressure wave generated by the explosive heating effect may compromise the blade's structural integrity. With the claimed arrangement, the sensor is configured to detect this pressure wave for thereby indicating that a by-pass lighting stroke has occurred. Conversely, in situations where a lightning stroke is caught by the LPS receptors, the current is passed through the down-conductor in a controlled manner, without forming arcs and the associated shockwave. Accordingly, embodiments of the invention may allow by-pass lightning strokes to be differentiated from captured lightning strokes. This may thereby provide an inexpensive apparatus for the monitoring of a relatively low probability, but high consequence by-pass lightning stroke incident. In turn, this data may be used to help to plan blade inspections and ensure the timely repair of blades to prevent consequential damage that could otherwise occur from allowing operation to continue with a damaged blade. The data may also be used by stakeholders, such as blade and LPS suppliers, to provide performance information.

In embodiments, the sensor monitor is a datalogger. In embodiments, the sensor monitor samples the output from the air pressure sensor at a sample frequency set for identifying air pressure increases associated with a supersonic pressure wave. In this way, a sufficiently high sample rate is used so that a shockwave traveling at supersonic speeds can be detected. As such, the monitor may log pressure readings from the pressure sensor at fast enough intervals that a transient pressure increase associated with a shockwave may be recorded.

In embodiments, the sensor monitor samples the output from the air pressure sensor at a sample frequency of 800 Hz or higher and, more preferably, at 1 kHz or higher. In preferred embodiments, the sensor monitor samples the output from the air pressure sensor at a sample frequency of 10kHz - 10 MHz, and more preferably is sampled in the range of 100 kHz - 1.2 MHz, or 800 kHz - 1.2 MHz. In this way, the high sample frequency provides higher resolution recording of pressure variances for identifying the shockwave. In embodiments, the pressure sensor has a measuring rate of 1 kHz or higher. In preferred embodiments, the pressure sensor has a measuring rate of 10 kHz or higher, and more preferably between 10 kHz and 10 MHz. This thereby provides rapid sensor feedback.

In embodiments, the sensor monitor generates a data output representing air pressure over time for identifying the lightning generated shockwave. In this way, the monitor may provide an output for allowing the pressure changes to be plotted over time so that transient increases in pressure may be identified and correlated with other data, such as data from the LPS monitoring system. For example, a pressure spike indicating an arc generated shockwave may be matched to a current surge recorded by the LPS monitor. The combination of this data may thereby allow a lightning stroke to be identified as a by-pass lightning stroke.

In embodiments, the sensor monitor comprises a buffer for logging pressure sensor output data, and a triggering module for identifying a sensed pressure exceeding a threshold, wherein the sensor monitor generates a data output file comprising pressure sensor output data logged during a time period starting from a time before the sensed pressure exceeded the threshold to a time after the sensed pressure exceeded the threshold. As such, a triggered data storage function is provided whereby a potential by-pass lightning stroke event is identified by the pressure exceeding a threshold, and the buffer is used to generate a data file including data from the time immediately before and after the event. This thereby provides a more complete data set for subsequent analysis. In embodiments, the buffer may log pressure sensor output data for a time period of up to 1 minute before and 1 minute after the sensed pressure exceeded the threshold. More preferably, the buffer may log pressure sensor output data for a time period of up to 10 seconds before and 10 seconds after the sensed pressure exceeded the threshold.

In embodiments, the sensor monitor comprises a processor for analysing the output from the air pressure sensor and for identifying a transient increase in air pressure as a lightning generated shockwave. In this way, the apparatus may automatically identify a shockwave based on the sensed pressure. In this way, the processor may perform active monitoring and flag events which may require maintenance investigation.

In embodiments, the sensor monitor outputs a data output to a supervisory control and data acquisition, SCADA, system. In this way, the apparatus may provide feedback for status monitoring. This may allow for remote monitoring onshore, allowing the pressure data to be analysed in conjunction with other data feedback systems. In other embodiments, the sensor monitor may be independent of the SCADA system, thereby facilitating easier retrofitting to existing wind turbine assemblies.

In embodiments, the mount is for mounting the air pressure sensor within one of a blade and a hub of the wind turbine blade assembly. In this way, sensor monitors may be mounted within individual blades of the blade assembly. In embodiments, a sensor may be mounted to the root of the blade. In arrangements where the interior of the blades are in fluid communication with a hollow hub, a single pressure sensor provided in the hub may allow detection of shockwaves generated in any of the blades.

In embodiments, the apparatus comprises a plurality of air pressure sensors, and a plurality of mounts for mounting respective air pressure sensors within the wind turbine blade assembly, and wherein the sensor monitor identifies a lightning generated shockwave based on the outputs from one or more of the plurality of air pressure sensors. In this way, an array of sensors may be provided for detecting shockwaves in different regions of the blade assembly.

In embodiments, at least two of the plurality of mounts are for mounting their respective air pressure sensors within different internal cavities of the wind turbine blade assembly. In this way, different sensors may be provided for detecting shockwaves in different blades and/or different internal cavities within the same blade.

According to a second aspect of the present invention, there is provided a lightning stroke diagnostic method comprising the steps of: mounting an air pressure sensor within an internal cavity of a wind turbine blade assembly using a mount, the air pressure sensor for detecting an increase in air pressure within the internal cavity; monitoring an output from the air pressure sensor using a sensor monitor; and identifying a lightning generated shockwave within the internal cavity based on the monitored output. In this way, a by-pass lighting stroke may be identified based on the detection of a supersonic pressure wave generated inside the hollow interior of the blade assembly.

In embodiments, the step of monitoring the output from the air pressure sensor comprises sampling the output at a sample frequency set for identifying air pressure increases associated with a supersonic pressure wave.

In embodiments, the step of monitoring the output from the air pressure sensor comprises sampling at a sample frequency of 800 Hz or higher and, preferably, at 1 kHz or higher. In preferred embodiments, the sample frequency is in the range of 10 kHz-10 MHz, and preferably is in the range of 100 kHz - 1.2 MHz, or 800 kHz - 1.2 MHz. At lower sampling frequencies, a sharp peak in air pressure associated with a by-pass lightning stroke may be more difficult to identify. Conversely, higher sampling frequencies require more advanced sensors and much higher datalogging speeds and storage capacity, which increases costs. Consequently, a sampling frequency of around 1 MHz is preferred.

In embodiments, the lightning stroke diagnostic method further comprises generating a data output representing air pressure over time for identifying the lightning generated shockwave.

In embodiments, the step of mounting an air pressure sensor comprises mounting a plurality of air pressure sensors using a plurality of mounts, and wherein the step of monitoring an output comprises monitoring outputs from the plurality of air pressure sensors.

In embodiments, the step of mounting the plurality of air pressure sensors comprises mounting at least two of air pressure sensors within different internal cavities of the wind turbine blade assembly.

According to an alternative aspect, there is provided wind turbine lightning stroke diagnostic apparatus comprising: a light sensor for detecting a lightning flash; a mount for mounting the light sensor within an internal cavity of a wind turbine blade assembly; and a sensor monitor configured for identifying a lightning flash within the internal cavity based on an output from the light sensor.

Illustrative embodiments of the present invention will now be described with reference to the accompanying drawings in which:
Figure 1 shows cut away isometric view of a wind turbine blade incorporating a lightning diagnostic apparatus according to a first embodiment;
Figure 2 shows a schematic illustration of the wind turbine blade shown in Figure 1 when a lightning stroke hits the LPS receptor;
Figure 3 shows a schematic illustration of the wind turbine blade shown in Figure 1 when a by-pass lightning stroke occurs; and
Figure 4 shows a cross sectional view of a wind turbine nacelle and blade assembly incorporating a lightning diagnostic apparatus according to a second embodiment.

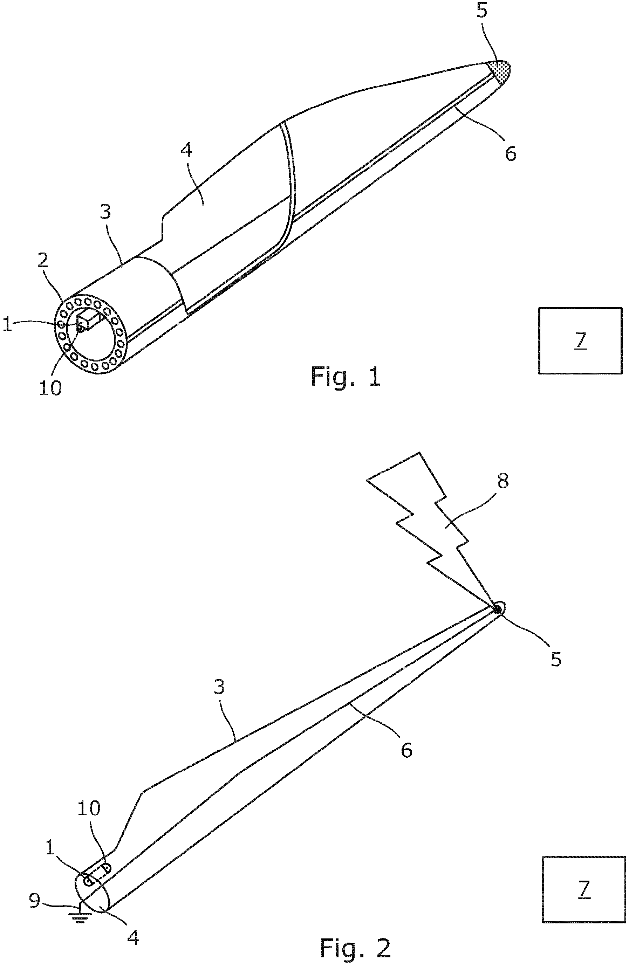

Figure 1 shows a lightning diagnostic apparatus according to a first embodiment, when mounted to a wind turbine blade 3. The wind turbine blade 3 is provided as a hollow body formed of a composite material, with an internal cavity 4 and a root end 2 for attachment to the rotor hub. The distal end of the blade comprises a metallic tip lightning receptor 5 which is connected to a conductive strip 6 which extends down through the blade to a grounded down-conductor and forms part of the turbine's lightning protection system (LPS). Although in this example the blade is provided with a single tip lightning receptor 5, in other LPS arrangements, a plurality of lightning receptors may be provided along the length of the blade 3.

A pressure sensor 1 is provided in the blade's internal cavity 4, and is mounted to an inner wall of the blade 3 using mounting formations 10. The pressure sensor 1 generates an output signal which is proportional to the detected air pressure within the internal cavity. The output signal is fed to a remote sensor monitor in the form of a datalogger 7, which logs the sensor readings at a preset sample frequency into a buffer. The connection between the sensor 1 and the datalogger 7 may be, for example, a wired or wireless connection. The sample frequency is set to be sufficiently high that a transient increase in pressure associated with a shockwave can be detected. In this embodiment, the sample frequency is set at 1 MHz. For context, other monitoring systems within the wind turbine will typically operate at sample frequencies that are orders of magnitude lower, often matching the turbine rotation speed of around 5-20 revolutions per minute.

In this embodiment, the datalogger 7 comprises a triggering module which activates a triggered data storage process when the sensed pressure exceeds a threshold corresponding to a minimum pressure associated with a potential by-pass generated shockwave. When the triggered data storage process is initiated, a processor within the datalogger 7 reads the previously logged values from the buffer and continues to log new values for a predetermined time period after. This logged data is then output as a data output file, such as CSV file, and consequently provides pressure data covering a time period starting from before the triggering event to a time after. In this embodiment, the data file covers a time period of 10 seconds before and 10 seconds after.

The data output file generated by the datalogger 7 is transmitted to an onshore server for analysis using a file transfer protocol. In other embodiments, the data output file may be stored locally, or the sensor datalogger 7 may be interfaced with the wind turbine's SCADA system for centrally collating logged data with other data for analysis offshore. As part of the analysis, the pressure data may be plotted in a graph showing pressure over time, with this data subsequently being used in conjunction with other data for diagnostic purposes.

Figure 2 shows a schematic illustration of the above arrangement when a lightning stroke 8 hits the tip receptor 5 on the blade 3. In this scenario, the current from the lightning stroke is conducted through the conductive strip 6 to the grounded down-conductor 9. As such, no shockwaves are generated within the internal cavity 4.

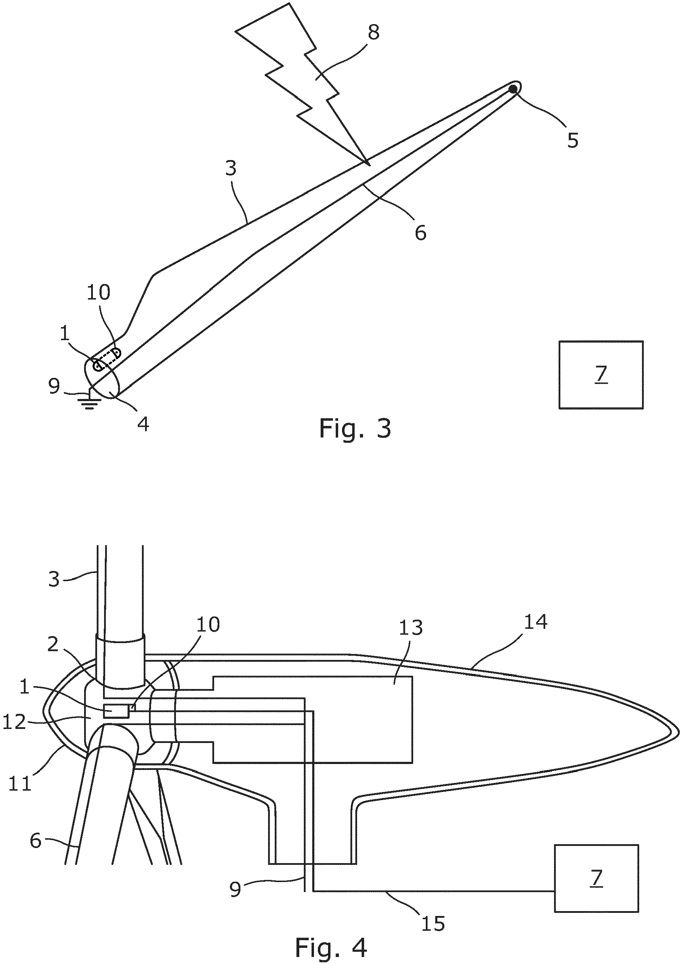

Figure 3 shows a schematic illustration of the above arrangement when a by-pass lightning stroke occurs. In this scenario, the lightning 8 hits the blade 3 at a distance from the tip receptor 5. As such, the current is conducted in an uncontrolled manner through and over the blade material, inside the blade's hollow structure, until it reaches the conductive strip 6, at which point it is then conducted through to the down-conductor 9 to ground. The uncontrolled conductions through the blade material results in arc formations at the interior surface of the blade material, which explosively heats the air leading to a pressure shockwave being generated within the internal cavity 4. The pressure shockwave travels down the internal cavity 4, where the pressure sensor 1 detects it. Although the pressure wave travels quickly over the sensor 1 and then dissipates, the sample rate of the datalogger 7 is able to log the transient increase in pressure. This data may then be output by the datalogger 7 for identifying a by-pass lightning stroke.

Figure 4 shows a second embodiment of the invention. This embodiment operates in substantially the same way as the first embodiment, except that the pressure sensor 1 is incorporated into the hub 12 of the blade assembly. Specifically, the blades 3 are connected at their root 2 to the hub 12, which links the blades to the generator 13 within the wind turbine's nacelle 14. The hub 12 is provided as a hollow body that is in fluid communication with the internal cavities 4 within each of the blades 3. The pressure sensor 1 is mounted within the internal cavity of the hub 12. A hub cover 11 is provided over the front of the hub 12.

With this arrangement, a shockwave generated within any one of the blades 3 will be transmitted through the fluid communication with the hub 12 where it will be registered by the pressure sensor 1. The wired output 15 from the pressure sensor 1 is transmitted to the datalogger 7 which in turn logs the associated increase in pressure. As such, for turbine blade assemblies that have interconnected internal cavities, this arrangement may allow a single pressure sensor 1 to provide diagnostic information for the whole blade assembly.

Accordingly, with embodiments of the invention, a by-pass lighting stroke may be identified based on the pressure sensor and monitor being configured to detect a supersonic pressure wave generated inside the hollow interior of the blade assembly. That is, shockwaves arising from the uncontrolled conduction through the blade material, and between the lightning entrance point at the blade shell and the LPS down conductor, may be detected and used to identify by-pass lighting strokes. This may therefore provide additional diagnostic information, which may then be used, for example, with correlated LPS monitoring data to better characterise the nature of a lightning stroke and differentiate between captured strokes and by-pass strokes. For instance, a lightning stroke event which has recorded a relatively low current though the LPS monitoring system may be identified as a potentially more damaging by-pass lightning stroke based on the detection of a pressure shockwave. Furthermore, in the absence of an LPS detection, the identification of a by-pass generated shockwave may be used to prompt a maintenance operation.

It will be understood that the embodiments illustrated above show applications of the invention only for the purposes of illustration. In practice the invention may be applied to many different configurations, the detailed embodiments being straightforward for those skilled in the art to implement.

For example, although in the illustrative embodiments a single pressure sensor is shown, it will be understood that a plurality of sensors may be provided. For example, a sensor may be provided for each wind turbine blade 3. Equally, in arrangements where the wind turbine blades 3 have a plurality of cavities 4, sensors may be mounted within each cavity 4. The datalogger 7 may receive and log inputs from the plurality of sensors.

Furthermore, it will also be understood that various types of pressure sensors may be used. For example, as the frequency range of the change in air pressure associated with a by-pass lightning strike is broad, any pressure sensor capable of registering fast changes in air pressure may be used, including microphones and pressure sensitive capacitor-based sensors.

Moreover, although in the illustrative embodiments the datalogger 7 has been described as a data logger, in other embodiments, the datalogger 7 may comprise more advanced processing for analyzing the received pressure data. For example, in embodiments, the datalogger 7 may process incoming pressure sensor data in real time and trigger an alert when a pressure shockwave is detected. This automatic triggering of an alert may in turn trigger other actions, such as the automatic throttling or shutdown of the wind turbine generator. For example, the diagnostic apparatus may be connected to a wind turbine controller and, if a pressure shockwave is detected above a predetermined threshold indicating a by-pass lightning stroke, an alert generated by the diagnostic apparatus may trigger the wind turbine controller to shut down the wind turbine generator.

Further, although in the above illustrative embodiment the sensor monitor has been implemented as a datalogger sampling at a high frequency, it will be understood that other sensor monitor implementations are possible. For example, the sensor monitor may comprise a mechanical trigger which is switched by a pressure wave above a threshold associated with a by-pass lightning stroke. Triggering of the mechanical trigger may in turn generate a data entry indicating that a by-pass lightning stroke has occurred or, for example, may itself initiate the sampling of pressure measurements for detecting the remainder of the pressure wave.

Finally, it will also be understood that the diagnostic apparatus may comprise other sensors. For example, light sensors or other electromagnetic sensors may be provided for detecting electromagnetic events associated with a by-pass lightning stroke. For example, a light sensor may be provided mounted within an internal cavity for detecting the arcing associated with a bypass lightning strike. As such, the detection of light above a threshold intensity may thereby be used to determined that a by-pass lightning strike has occurred. This may be used for identifying bypass lightning strokes in conjunction with pressure sensor measurements or independently.

## Claims

1. Wind turbine lightning stroke diagnostic apparatus comprising:
an air pressure sensor for detecting an increase in air pressure;
a mount for mounting the air pressure sensor within an internal cavity of a wind turbine blade assembly; and
a sensor monitor configured for identifying a lightning generated shockwave within the internal cavity based on an output from the air pressure sensor.

2. A wind turbine lightning stroke diagnostic apparatus according to claim 1, wherein the sensor monitor samples the output from the air pressure sensor at a sample frequency set for identifying air pressure increases associated with a supersonic pressure wave.

3. A wind turbine lightning stroke diagnostic apparatus according to claim 1 or 2, wherein the sensor monitor samples the output from the air pressure sensor at a sample frequency of 800 Hz or higher.

4. A wind turbine lightning stroke diagnostic apparatus according to any preceding claim, wherein the sensor monitor generates a data output representing air pressure over time for identifying the lightning generated shockwave.

5. A wind turbine lightning stroke diagnostic apparatus according to any preceding claim, wherein the sensor monitor comprises a processor for analysing the output from the air pressure sensor and for identifying a transient increase in air pressure as a lightning generated shockwave.

6. A wind turbine lightning stroke diagnostic apparatus according to any preceding claim, wherein the sensor monitor comprises a buffer for logging pressure sensor output data, and a triggering module for identifying a sensed pressure exceeding a threshold,
wherein the sensor monitor generates a data output file comprising pressure sensor output data logged during a time period starting from a time before the sensed pressure exceeded the threshold to a time after the sensed pressure exceeded the threshold.

7. A wind turbine lightning stroke diagnostic apparatus according to any preceding claim, wherein the mount is for mounting the air pressure sensor within one of a blade and a hub of the wind turbine blade assembly.

8. A wind turbine lightning stroke diagnostic apparatus according to any preceding claim, wherein the apparatus comprises a plurality of air pressure sensors, and a plurality of mounts for mounting respective air pressure sensors within the wind turbine blade assembly, and
wherein the sensor monitor identifies a lightning generated shockwave based on the outputs from one or more of the plurality of air pressure sensors.

9. A wind turbine lightning stroke diagnostic apparatus according to claim 8, wherein at least two of the plurality of mounts are for mounting their respective air pressure sensors within different internal cavities of the wind turbine blade assembly.

10. A lightning stroke diagnostic method comprising the steps of:
mounting an air pressure sensor within an internal cavity of a wind turbine blade assembly using a mount, the air pressure sensor for detecting an increase in air pressure within the internal cavity;
monitoring an output from the air pressure sensor using a sensor monitor; and
identifying a lightning generated shockwave within the internal cavity based on the monitored output.

11. A lightning stroke diagnostic method according to claim 10, wherein the step of monitoring the output from the air pressure sensor comprises sampling the output at a sample frequency set for identifying air pressure increases associated with a supersonic pressure wave.

12. A lightning stroke diagnostic method according to claim 10 or 11, wherein the step of monitoring the output from the air pressure sensor comprises sampling at a sample frequency of 800 Hz or higher.

13. A lightning stroke diagnostic method according to any of claims 10 to 12, further comprising generating a data output representing air pressure over time for identifying the lightning generated shockwave.

14. A lightning stroke diagnostic method according to any of claims 10 to 13, wherein the step of mounting an air pressure sensor comprises mounting a plurality of air pressure sensors using a plurality of mounts, and
wherein the step of monitoring an output comprises monitoring outputs from the plurality of air pressure sensors.

15. A lightning stroke diagnostic method according to claim 14, wherein the step of mounting the plurality of air pressure sensors comprises mounting at least two of air pressure sensors within different internal cavities of the wind turbine blade assembly.
